# EUROPEAN PATENT SPECIFICATION

(11) **EP 1 154 447 B1**
(45) Date of publication and mention of the grant of the patent: **09.06.2004**
(21) Application number: 00117970.4
(22) Date of filing: 22.08.2000
(51) Int. Cl.: H01G 5/16

(54) **Variable capacitor and pointer**
Variabler Kondensator und Zeiger
Condensateur variable et pointeur

(30) Priority: 08.05.2000 JP 2000134154
(43) Date of publication of application: 14.11.2001
(73) Proprietor: Wacom Co., Ltd, Kitasaitama-Gun, 349-1148 Saitama-Ken (JP)
(72) Inventor: Fukushima, Yasuyuki c/o Wacom Co.,LTD., Kitasaitama-gun JP-349-1148 Saitama-ken (JP); Fujitsuka, Hiroyuki c/o Wacom Co.,LTD., Kitasaitama-gun JP-349-1148 Saitama-ken (JP)
(74) Representative: Paul, Dieter-Alfred, Dipl.-Ing.

(56) References cited:
- DE-A- 19 847 563
- US-A- 5 206 785

## Description

The present invention relates to a variable capacitor. More particularly, the present invention relates to a variable capacitor to be used in a pointer of a pointing device for inputting a coordinate into a computer.

The prior art for the variable capacitor to be used in the pointer of the pointing device is disclosed in Japanese laid-open patent publication Nos. 4-96212 and 5-275283.

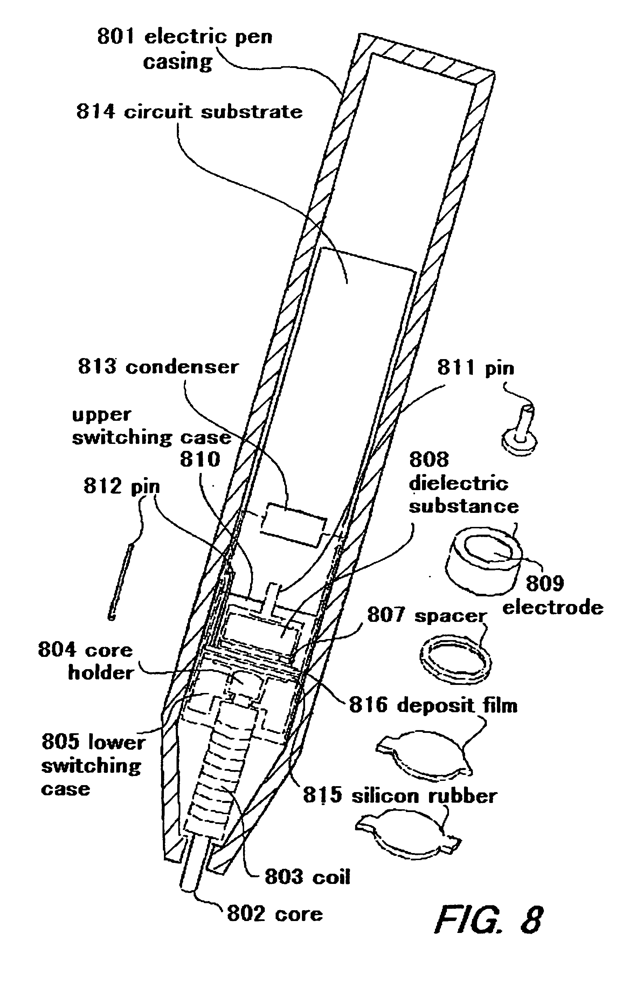

The prior art disclosed in Japanese laid-open patent publications No. 4-96212 will be briefly explained below. FIG. 8 illustrates a pointer (hereinafter referred to as a hard-type pen) disclosed in Japanese laid-open patent publication No. 4-96212. An electric pen casing 801 of FIG. 8 comprises a casing for an electric pen including a circuit substrate 814, which is provided with a resonant circuit. The electric pen comprises a pen-type pointer and performs in cooperating with the pointing device. Although an illustration of the pointing device is herein omitted, the pointing device is provided with flat plate input surface, so-called a tablet and many loop coils, which are arranged in parallel and in every direction. The resonant circuit of the electric pen allows the tablet to detect a position, which the electric pen indicates on the tablet by an electromagnetic exchange with a loop coil in the tablet side.

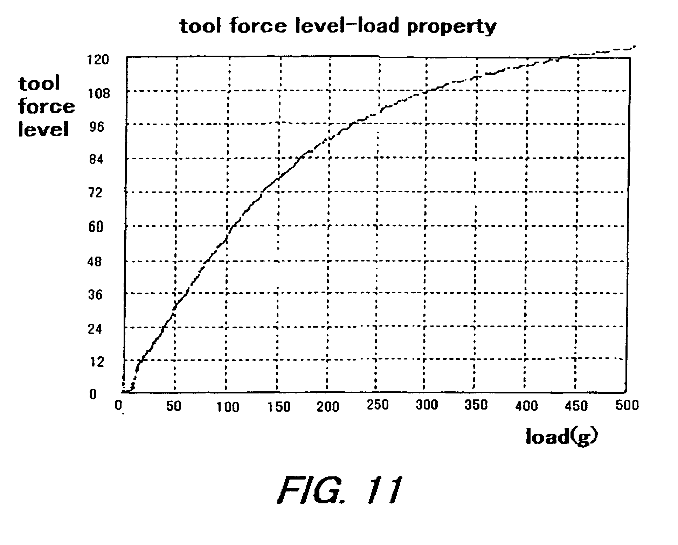

On the circuit substrate 814, the above mentioned resonant circuit is disposed. The resonant circuit comprises a fixed condenser 813, a variable capacitor (mainly, comprising a dielectric substance 808, an electrode 809 and a deposition film 816) and a coil 803. Examining the variable capacitor for the use of a hard-type pen more in detail, it can be appreciated that it has a configuration such that a pin 811, the electrode 809, the dielectric substance 808, a spacer 807, the deposition film 816, a silicon rubber 815, a pin 812 and a core holder 804 are clipped by an upper switching case 810 and a lower switching case 805. The pin 811 comprises a conducting wire for conducting the electrode 809 from a terminal and the pin 812 comprise a conducting wire for conducting the deposition film 816 from the terminal. The dielectric substance 808 comprises cylindrical ceramic and it is provided with the electrode 809 on one side surface thereof, for example, by baking. The dielectric substance 808 is provided with the deposition film 816 on the other surface thereof, as a second electrode via the spacer 807. Pressing the deposition film 816 via a core 802, a core holder 804 and the silicon rubber 815 allows a contacting area between the deposition film 816 and the dielectric substance 808 to grow larger. Accordingly, the air between the deposition film 816 and the dielectric substance 808 is expelled and the air layer less contributes as a dielectric substance, so that the condenser in FIG. 8 functions as a variable capacitor. As a result of continuously changing of a combined capacity of the variable capacitor and a condenser 813, a resonance frequency of the resonant circuit is deviated. Detecting the deviant resonance frequency at the side of above-mentioned pointing device enables to detect how much a pent point (the core 802) is pressed. A tool force which is finally detected at the side of above-mentioned pointing device against a load of the pen point is illustrated in FIG. 11. For the reference, a specification of the hard-type pen is given below. In the hard-type pen, a ferrite core of the coil is made of a cylindrical core, so-called L6 member having an outer diameter of 4 mm, an inner diameter of 2 mm and a length of 17.5 mm. A wire of ULAP7/0.07 winds around the ferrite core at thirty-seventh turns closely contact in flat. An electric property of the coil is inductance L = 26 µH, Q = 145 (a frequency of 500 kHz). A ceramic condenser is a titanic acid barium system and it has an outer diameter of 4mm and a thickness of 1 mm. On one side of the ceramic condenser, an electrode is deposited and other side thereof is mirror-finished. The silicon rubber has a thickness of 0.4mm and an outer diameter of 4 mm. As a spacer, upilex 40 micrometer is used and it has an outer diameter of 4 mm and an inner diameter of 3.3 mm with a toroidal shape. As a deposit film, upilex of 75 micrometer, which is deposited by nickel chrome having a thickness of 1000 angstrom, is used.

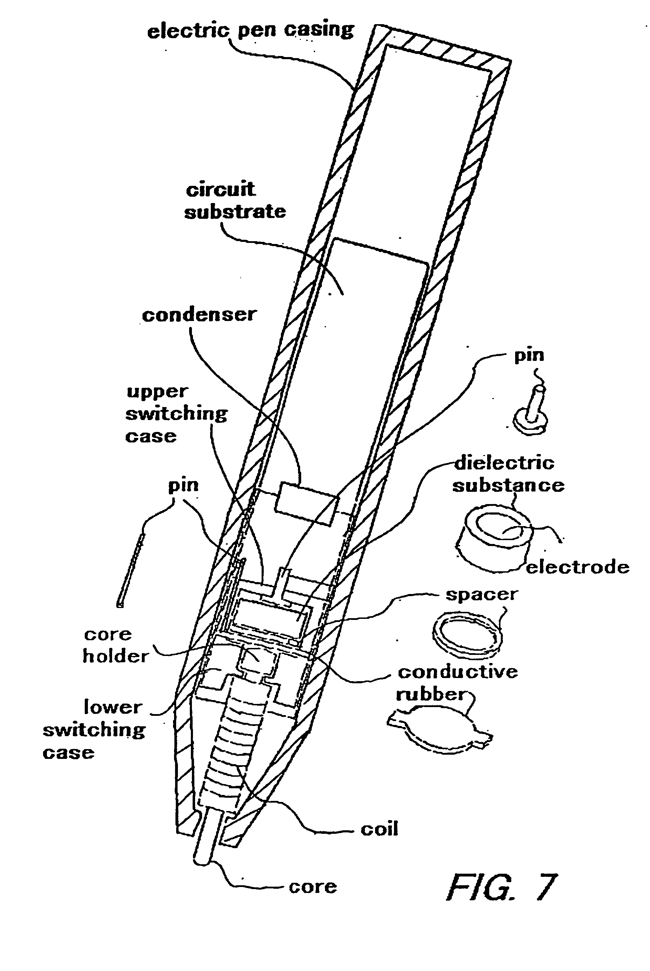

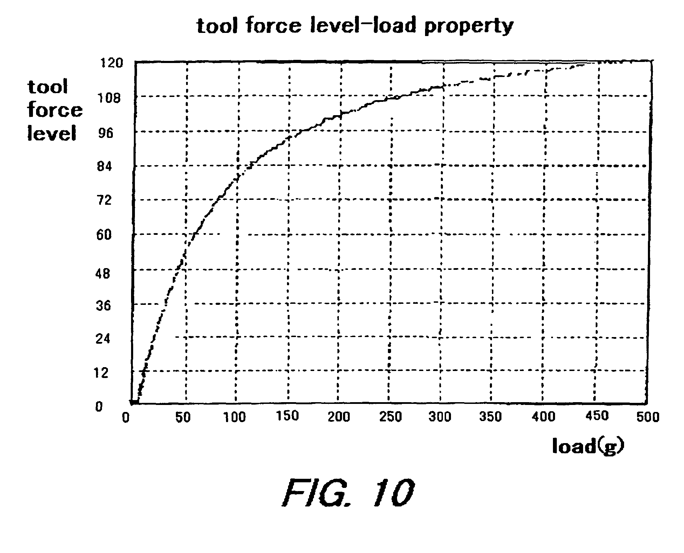

Next, the prior art disclosed in Japanese laid-open patent publication No. 5-275283 will be briefly explained below. A FIG. 7 shows a pointer (hereinafter referred to as a soft-type pen), that is disclosed in Japanese laid-open patent publication No. 5-275283. The pointer of FIG. 7 comprises a modified hard-type pen, which is modified so as to react due to a lighter load. The soft-type pen is different from the hard-type pen in its variable capacitor. More in detail, in the soft-type pen, a portion comprised of a combination of a deposit film and silicon rubber in a hard-type pen is replaced by conductive rubber (synthetic rubber formed of mixture of dielectric particles). Further, in the soft-type pen, the thickness and the shape of a spacer is changed and a mirror-finished end face of the dielectric substance of the hard-type pen is replaced by a ground face using a file of No. 320, so that the end face of the dielectric substance of the soft-type pen becomes more harsh. Thus, a tool force property (a tool force-load property) shown in a graph of FIG. 10 is given. The graph of FIG. 11 shows that the tool force about 30 is outputted at the load of 50g. However, from the graph of FIG. 10, the tool force about 55 is outputted at the load of 50g. As a result, it can be said that an electric pen (a pointer) with lighter touch is realized in FIG. 11. For the reference, the specification of the soft-type pen is given below. In the soft-type pen, a ferrite core of the coil is made of a cylindrical core, so-called L6 member having an outer diameter of 4 mm, an inner diameter of 2 mm and a length of 17.5 mm. A wire of ULAP7/0.07 winds around the ferrite core at thirty-seventh turns closely contact in flat. An electric property of the coil is inductance L = 26 µH, Q = 145 (a frequency of 500 kHz). A ceramic condenser is a titanic acid barium system and it has an outer diameter of 4mm and a thickness of 1 mm. On one side of the ceramic condenser, an electrode is burned into and other side thereof is ground by a file No. 320. The conductive rubber has a thickness of 0.4mm and an outer diameter of 4 mm. As a spacer, upilex of 75 micrometer is used and it has an outer diameter of 4 mm and an inner diameter of 2.4 mm with a toroidal shape. The conductive rubber comprises synthetic rubber, which is formed of mixture of many carbon particles as dielectric particles, and the surface of the conductive rubber has roughness in some extent. Therefore, an end face of the dielectric substance contacting (or opposing) with the conductive rubber is not mirror-finished but it is ground by a file No. 320, so that high exfoliation can be gained after contact with the conductive rubber. Due to using the conductive rubber, high flexibility can be realized, so that capacity of the soft-pen type can be varied even with a lighter touch.

In the above-described conventional art, the hard-type pen and the soft-type pen have common components, such as a core holder, an upper switching case, a lower switching case and pins as terminals for two electrodes. The conventional art involves a problem such that manufacturing cost becomes high due to the existence of many components and many steps for manufacturing. Further, since the casing of the electric pen is limited in an outer diameter, it is impossible that the conventional art is employed in a narrow pen, for example, a pen with an outer diameter of 6.5mm.

The inventors of the present invention thought up a following idea in order to solve the above problem. The idea is such that the number of the components and the steps for manufacturing could be decreased and a variable capacitor could be employed in a narrow electric pen, if the plastic components, such as the upper switching case and the lower switching case, were omitted. The inventors of the present invention further thought up an idea to omit the pins to be connected to the two electrodes. They made effort to provide a variable capacitor, which needs fewer components.

In order to solve the foregoing problem, a variable capacitor according to the present invention comprises a dielectric substances having two side faces, wherein electrode plates are arranged on said side faces, and is characterized in that two electrode plates are disposed on one side face of said dielectric substance, a flexible electrode plate is disposed on the other side face of said dielectric substance and a pressing material for varying a relative pressure or displacement is disposed between said flexible electrode plate and said dielectric substance.

The flexible electrode plate preferably comprises materials, which are made of a mixture of many conductive particles.

The flexible electrode plate may comprise a deposition film. In this case, there is preferably provided a member made of an elastic material between the pressing material and the flexible electrode plate.

There is preferably provided a separation material for separating the pressing material and the flexible electrode plate between the pressing material and the flexible electrode plate.

In a pointer according to the present invention comprising a tuning circuit, the variable capacitor may serve as one portion of the tuning circuit

It is preferable that the pointer according to the present invention has a casing with a similar shape as that of a pen and the pressing member is disposed so as to transmit the pressure against a pen point to the variable capacitor.

Further, the pointer according to the present invention may have a casing with a similar shape as that of a pen. The pressing member may be disposed so as to transmit the pressure against a pen point to a portion being opposed to the pen point to the variable capacitor.

Further, in the pointer according to the present invention, the two electrode plates may be provided so as to be separated at a predetermined distance. A double-sided circuit substrate, of which thickness is the same as said separation distance, may be provided such that the side face of the double-sided circuit substrate abuts against the side face of the dielectric substance at the separated portion to be perpendicular to said electrode plates. A conductor of a print circuit may be provided on a portion which is contacting with the two electrode plates of the double-sided circuit substrate and the conductor portion and the two electrodes may be soldered, respectively.
FIG. 1 shows a variable capacitor according to an embodiment of the present invention comprising a dielectric substance, two electrodes disposed on one side surface of the dielectric substance and a conductive rubber mounted on other side surface of the dielectric substance;
FIG. 2 shows a variable capacitor according to an example of the present invention in which a combination of a deposition film and a silicon rubber is employed as a substitute for a conductive rubber;
FIG. 3 shows a variable capacitor according to another embodiment of the present invention comprising a spacer in addition to the embodiment of the present invention shown in FIG. 1;
FIG. 4 shows a variable capacitor according to still another example of the present invention comprising a spacer in addition to the embodiment of the present invention shown in FIG. 2;
FIG. 5 shows a still another example in which a pressing down member is provided not on the back side of a coil but on the back side of a core;
FIG. 6 is a sectional view from an elongation in a direction that the two electrodes are separated showing a state that a circuit substrate and an electrode on the dielectric substance are soldered;
FIG. 7 shows an inner configuration of a conventional soft-type pen;
FIG. 8 shows an inner configuration of a conventional hard-type pen;
FIG. 9 is a graph showing a tool force-load property of a pointer according to the present invention;
FIG. 10 is a graph showing a tool force-load property of a conventional soft-type pen according to the prior art; and
FIG. 11 is a graph showing a tool force-load property of a conventional hard-type pen according to the prior art.

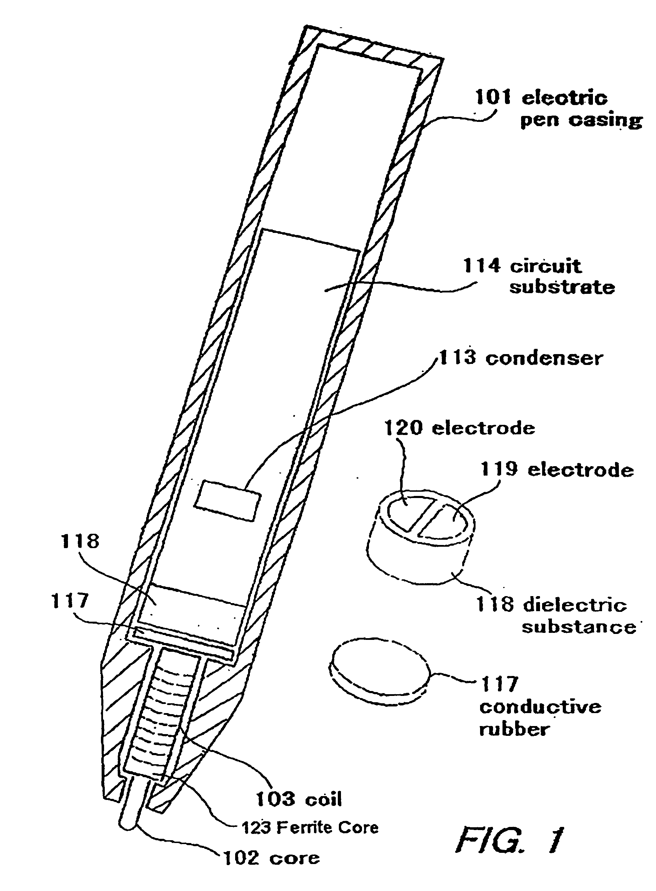

An embodiment of the present invention will be explained below with reference to the drawings. FIG. 1 shows a variable capacitor according to an embodiment of the present invention comprising a dielectric substance, two electrodes disposed on one side surface of the dielectric substance and a conductive rubber mounted on other side surface of the dielectric substance. This embodiment does not need components of an upper switching case and a lower switching case or the like while the conventional art requires such components. In the embodiment, a dielectric substance 118 can be in a size to fit an inner diameter of an electric pen casing 101. Accordingly, providing that the outer diameter of the dielectric substance 118 is 4mm as well as in the conventional art, the inner diameter of the electric pen casing 101 may be slightly larger than 4mm, that is enough to fit the outer diameter of the dielectric substance 118. As a result of that, it is possible to make an electric casing 101 with an outer diameter of around 6.5mm.

A core 102 is a member to realize writing touch of the electric pen as well as in the conventional art. The core 102 is also a member for transmitting pressing down force to the variable capacitor. With respect to this embodiment, it is assumed that the core 102 is composed integrally with the coil 103 to transmit the pressing down force to a conductive rubber 117. Therefore, a ferrite core 123 may press down the conductive rubber 117 . It is assumed that the ferrite core 123 is made of a L6 member and the ferrite core has an outer diameter of 4.0mm, an inner diameter of 2.0mm and a length of 17.5cm. A wire member is made of a Litz line 2-ULAP7/0.07 and winds around the ferrite core 123 at thirty-eighth turns closely contact in flat in the first layer and at thirty-fifth turns closely contact in flat in the second layer. An electric property of the ferrite core 123 is inductance L = 100 µH, Q = 200 (a frequency of 500 kHz).

As a conductive rubber , the conductive rubber 117 with a thickness of 0.4mm and an outer diameter of 4.0mm is employed. As a dielectric substance 118, the dielectric substance with a titanic acid strontium system is employed. The dielectric substance 1 has an outer diameter of 4mm and a thickness of 1 mm. One side face of the dielectric substance 118 facing the conductive rubber 117 is ground face using a file of No. 320. An other side face of the dielectric substance 118 is provided with an electrode 119 and an electrode 120 with a shape of a half moon by baking. As shown in FIG. 1, the electrodes 119 and 120 are provided such that each line portion of them are in parallel to each other and they are separated by a predetermined distance. The distance for separation between the electrode 119 and the electrode 120 corresponds to the thickness of a circuit substrate 114.

The dielectric substance 118 and the circuit substrate 114 may be connected electrically or mechanically by the soldered joint. The circuit substrate 114 has a rectangular shape and is elongated to the longitudinal direction of the pen as shown in FIG. 1. The shorter side abuts against a portion of the distance of separation between the electrode 119 and the electrode 120 as described above with respect to the dielectric substance 118. The circuit substrate 114 is so-called a double-sided substrate. Both of the front side and the backside of the circuit substrate 114 are provided with a conducting portion, which is a part of the circuit. The conducting portion is connected to the electrodes 119 and 120 by the soldered joint.

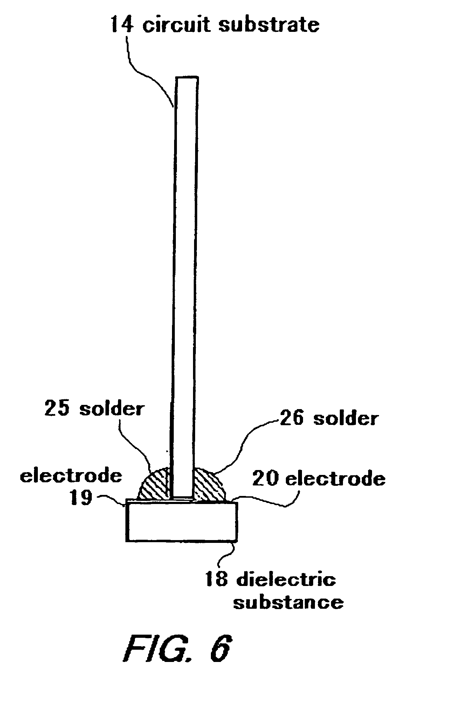

FIG. 6 shows a state that the conducting portion is connected to the electrodes 19 and 20 by the soldered joint. FIG. 6 is a sectional view from an elongation in a directio in which the two electrodes are separated showing a state that a circuit substrate 14 and the electrodes 19, 20 on the dielectric substance 18 are soldered. FIG. 6 is a sectional view showing a circuit substrate 14, solders 25, 26, electrodes 19, 20 and the dielectric substance 18. The circuit substrate 14 is provided with the soldered joint as standing perpendicular to one side face of the dielectric substance 18 to which two electrodes 19, 20 are disposed as described above. Owing to the soldered joint, even the conventional pin does neither require the upper switching case nor the lower switching case.

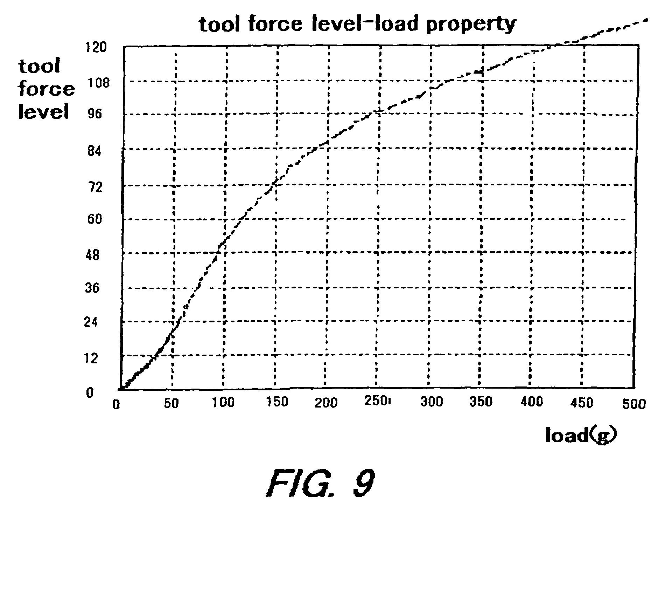

With reference to FIG. 1, the relation between the circuit substrate 114 and the electric casing 101 is explained below. In the circuit substrate 114, a print substrate circuit is composed of a condenser 113, a coil 103 and a variable capacitor according to the present invention such that they compose a resonance circuit. The side far from a pen point of the circuit substrate 114 is pressed by a portion of the inner configuration of the electric pen casing 101 to be fixed. Accordingly, when the pressing down force is added to a core 102, a conductive rubber 117 is pressed downwardly toward the side of the dielectric substance 118. It can be appreciated that a condenser is configured between the electrode 119 and the conductive rubber 117, another condenser is configured between the electrode 120 and the conductive rubber 117 and the integrated capacity thereof is obtained between the electrode 119 and the electrode 120. If the contact area between the conductive rubber 117 and the dielectric substance 118 becomes larger, the air between them less contributes as a dielectric substance. Therefore, the integrated capacity of the variable capacitor varies slightly, so that the resonance frequency of the resonance circuit also varies slightly. A pointing device detects the variance of the resonance frequency of the resonance circuit. FIG. 9 is a graph showing a tool force-load property of a pointer according to the present invention. Comparing FIG. 10 and FIG. 11, it can be understood that the electric pen is obtained having more soft touch than that of the conventional hard-type pen. Thus, a variable capacitor with fewer components and a pointer to use this variable capacitor are obtained.

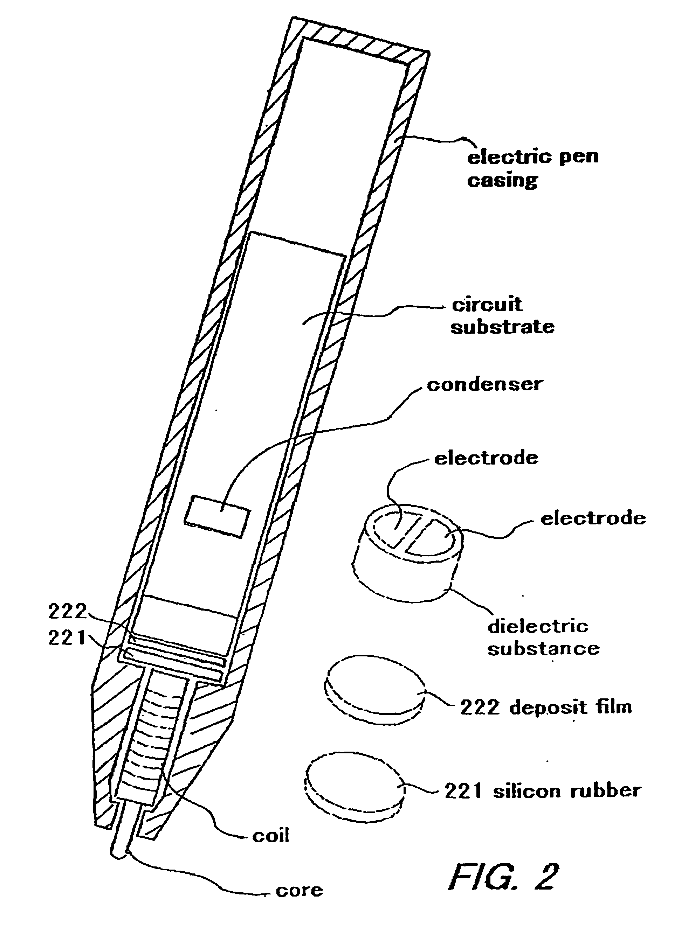

FIG. 2 shows a variable capacitor according to another example of the present invention in which a combination of a deposition film 202 and a silicon rubber 221 is employed as a substitute for a conductive rubber. As the deposition film 222, upilex of 75 micrometer can be utilized, which is deposited by nickel chrome having a thickness of 1000 angstrom. As a silicon rubber, the silicon rubber 201 with a thickness of 0.4mm and an outer diameter of 4.0mm is used. The other points are the same as those in the embodiment shown in FIG. 1.

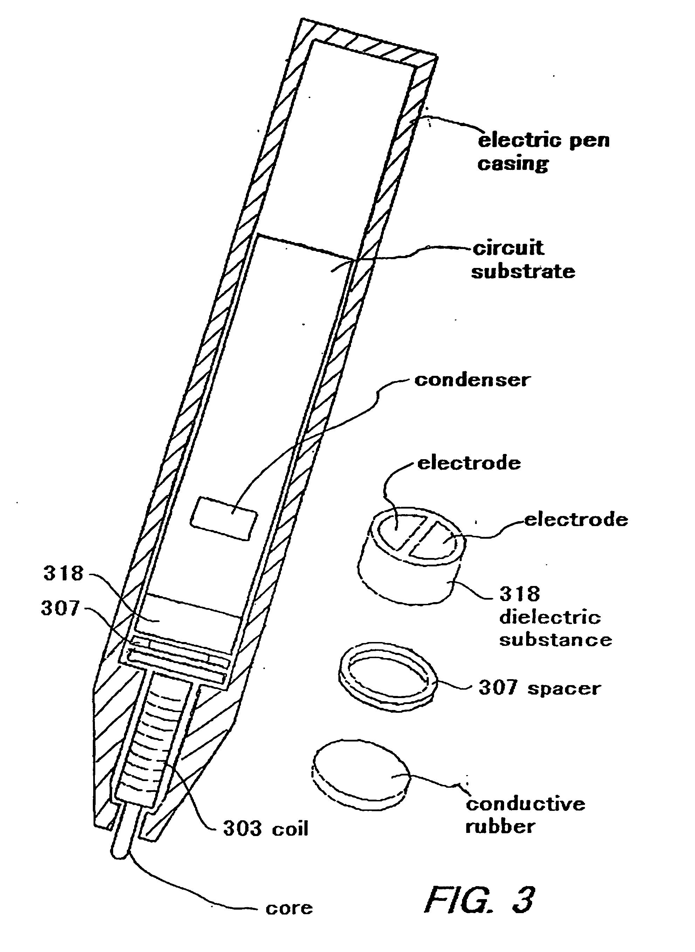

FIG. 3 shows a variable capacitor according to still another example of the present invention comprising a spacer 307 in addition to the embodiment of the present invention shown in FIG. 1. Depending on the selection of the inductance of the coil 303 and the capacity of the condenser, the example including the spacer 307 may be appropriate. It depends on the extent of the roughness in the finished side face, which is near to the pen point of the dielectric substance 318, whether the spacer is necessary or not.

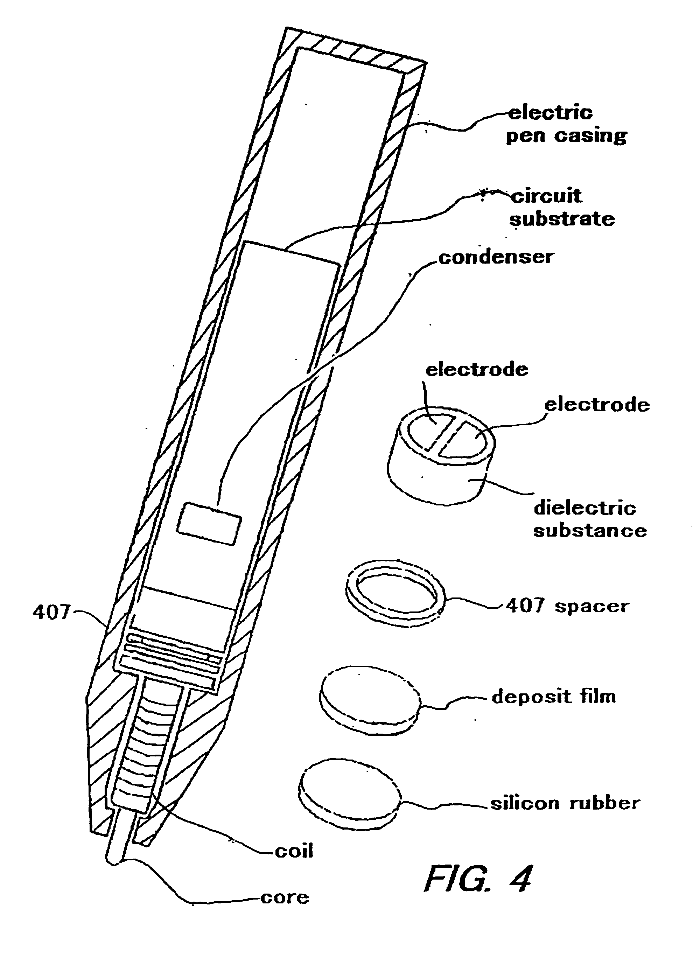

FIG. 4 shows a variable capacitor according to still another example of the present invention comprising a spacer 407 in addition to the embodiment of the present invention shown in FIG. 2.

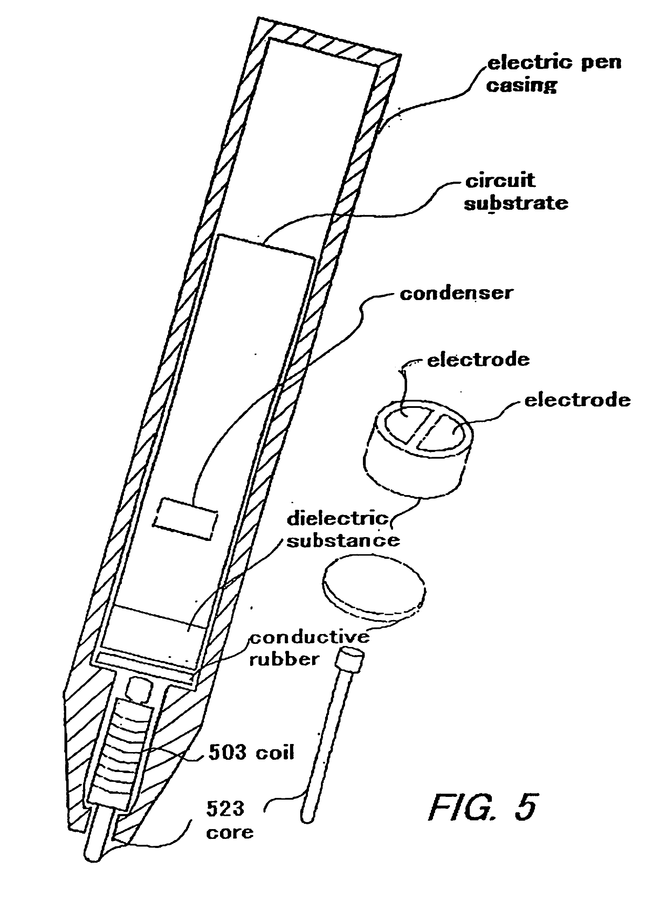

FIG. 5 shows still another example in which a pressing down member is provided not on the back side of a coil 503 but on the back side of a core 523. In this example, the coil 503 is provided so as to move slidably in the hollow of the cylindrical ferrite core. Making the back side of the core 523 rather thicker realizes this example, i.e., making the back side of the core 523 thicker allows the core 523 to move slidably in the hollow of the cylindrical ferrite core.

## Claims

1. A variable capacitor with
a dielectric substance (18, 118, 318) having two side faces, wherein electrode plates are arranged on said side faces, **characterized in that**
two electrode plates (19, 20, 119, 120) are disposed on one side face of said dielectric substance (18, 118, 318),
a flexible electrode plate (117, 221) is disposed on the other side face of said dielectric substance (18, 118, 318), and
a pressing material for varying a relative pressure or displacement is disposed between said flexible electrode plate (117, 221) and said dielectric substance (18, 118, 318).

2. The variable capacitor according to claim 1, **characterized in that** said flexible electrode plate (117, 221) comprises materials which are made of a mixture of many conductive particles.

3. The variable capacitor according to claim 1 or 2, **characterized in that** said flexible electrode plate (117, 221) comprises a deposition film (222).

4. The variable capacitor according to claims 1 to 3, **characterized in that** an elastic material is provided between said pressing material and said flexible electrode plate (117, 221).

5. The variable capacitor according to any preceding claim, **characterized in that** a separation material for separating said pressing material and said flexible electrode plate (117, 221) is provided between said pressing material and said flexible electrode plate (117, 221).

6. A pointer comprising a tuning circuit, **characterized in that** said variable capacitor according to any one of claims 1 through 5 serves as one portion of said tuning circuit.

7. The pointer according to claim 6, **characterized in that** a casing of said pointer has a similar shape as that of a pen.

8. The pointer according to claim 6 or 7, **characterized in that** said pressing material is disposed so as to transmit the pressure against a core (102, 523, 802) of said variable capacitor, in particular to a portion being opposed to the core (102, 523, 802).

9. The pointer according to claim 6 or 7, **characterized in that** said pressing material is disposed so as to transmit the pressure against a direction which is perpendicular to a longitudinal direction of said pointer of said variable capacitor.

10. The pointer according to any one of claims 6 through 9, **characterized in that** said two electrode plates (19, 20, 119, 120) are provided to be separated at a predetermined distance, wherein a double-sided circuit substrate, of which the thickness is the same as said separation distance, is provided such that the side face of said double-sided circuit substrate abuts against the side face of said dielectric substance (18, 118, 318) at the separated portion to be perpendicular to said electrode plates (19, 20, 119, 120) an a conductor of a print circuit is provided on a portion which is contacting with said two electrode plates (19, 20, 119, 120) of said double-sided circuit substrate, wherein said conductor portion and said two electrodes are soldered, respectively.

## Patentansprüche

1. Ein variablerer Kondensator mit
einem dielektrischen Körper (18, 118, 318), welcher zwei Seitenflächen aufweist, wobei Elektrodenplatten an den Seitenflächen angebracht sind, **dadurch gekennezeichnet,** daß
zwei Elektrodenplatten (19, 20, 119, 120) auf einer Seitenfläche des dielektrischen Körpers (18, 118, 318) angeordnet sind,
eine flexible Elektrodenplatte (117, 221) auf der anderen Seitenfläche des dielektrischen Körpers (18, 118, 318) angeordnet ist, und
ein Druckmaterial zwischen der flexiblen Elektrodenplatte (117, 221) und dem dielektrischen Körper (18, 118, 318) angeordnet ist, um einen relativen Druck oder eine Verschiebung zu variieren.

2. Der variable Kondensator nach Anspruch 1, **dadurch gekennzeichnet, daß** die flexible Elektrodenplatte (117, 221) Materialien umfaßt, welche aus einer Mischung von vielen leitfähigen Partikeln besteht.

3. Der variable Kondensator nach Anspruch 1 oder 2, **dadurch gekennzeichnet, daß** die flexible Elektrodenplatte (117, 221) einen Ablagerungsfilm (222) umfaßt.

4. Der variable Kondensator nach den Ansprüchen 1 bis 3, **dadurch gekennzeichnet, daß** ein elastisches Material zwischen dem Druckmaterial und der flexiblen Elektrodenplatte (117, 221) vorgesehen ist.

5. Der variable Kondensator nach einem der vorgehenden Ansprüche, **dadurch gekennzeichnet, daß** ein Trennmaterial zum Trennen des Druckmaterials und der flexiblen Elektrodenplatte (117, 221) zwischen dem Druckmaterial und der flexiblen Elektrodenplatte (117, 221) vorgesehen ist.

6. Ein Zeiger mit einem Abstimmkreis, **dadurch gekennzeichnet, daß** der variable Kondensator nach einem der Ansprüche 1 bis 5 als ein Abschnitt des Abstimmkreises dient.

7. Der Zeiger nach Anspruch 6, **dadurch gekennzeichnet, daß** ein Gehäuse des Zeigers eine ähnliche Form wie die eines Stiftes hat.

8. Der Zeiger nach Anspruch 6 oder 7, **dadurch gekennzeichnet, daß** das Druckmaterial derart angeordnet ist, daß es den Druck gegen einen Kern (102, 523, 802) des variablen Kondensators, insbesondere auf einen Bereich, welcher dem Kern (102, 523, 802) gegenüber liegt, überträgt.

9. Der Zeiger nach Anspruch 6 oder 7, **dadurch gekennzeichnet, daß** das Druckmaterial derart angeordnet ist, daß es den Druck in eine Richtung überträgt, welche senkrecht zu einer Längsrichtung des Zeigers des variablen Kondensators ist.

10. Der Zeiger nach einem der Ansprüche 6 bis 9, **dadurch gekennzeichnet, daß** die zwei Elektrodenplatten (19, 20, 119, 120) vorgesehen sind, um mit einem vorgegebenen Abstand voneinander getrennt zu sein, wobei ein doppelseitiger Schaltungskörper, dessen Dicke gleich dem Trennungsabstand ist, derart angeordnet ist, daß die Seitenfläche des doppelseitigen Schaltungskörpers an die Seitenfläche des dielektrischen Körpers (18, 118, 318) an einem abgetrennten Bereich stößt, um senkrecht zu den Elektrodenplatten (19, 20, 119, 120) ausgerichtet zu sein, und ein Leiter einer gedruckten Schaltung an einem Bereich vorgesehen ist, welcher mit den zwei Elektrodenplatten (19, 20, 119, 120) des doppelseitigen Schaltungskörpers in Berührung ist, wobei der Leiterbereich und die zwei Elektroden jeweils gelötet sind.

## Revendications

1. Un condensateur variable avec :
une substance diélectrique (18, 118, 318) ayant deux faces latérales, où les plaques d'électrode sont disposées sur lesdites faces latérales, **caractérisé en ce que**
deux plaques d'électrodes (19, 20, 119, 120) sont disposées sur une face latérale de ladite substance diélectrique (18, 118, 318),
une plaque d'électrode flexible (117, 221) est disposée sur l'autre face latérale de ladite substance diélectrique (18, 118, 318), et
un matériau à pression, pour varier une pression relative ou un déplacement, est disposé entre ladite plaque d'électrode flexible (117, 221) et ladite substance diélectrique (18, 118, 318).

2. Le condensateur variable selon la revendication 1, **caractérisé en ce que** ladite plaque d'électrode (117, 221) comprend des matériaux qui sont faits d'un mélange de plusieurs particules conductrices.

3. Le condensateur variable selon la revendication 1 ou 2, **caractérisé en ce que** ladite plaque d'électrode flexible (117, 221) comprend un film de dépôt (222).

4. Le condensateur variable selon les revendications 1 à 3, **caractérisé en ce qu'**un matériau élastique est prévu entre ledit matériau à pression et ladite plaque d'électrode flexible (117, 221).

5. Le condensateur variable selon n'importe laquelle des revendications précédentes, **caractérisé en ce qu'**un matériau de séparation pour séparer ledit matériau à pression et ladite plaque d'électrode flexible (117, 221) est prévu entre ledit matériau à pression et ladite plaque d'électrode flexible (117, 221).

6. Un pointeur comprenant un circuit de réglage, **caractérisé en ce que** ledit condensateur variable selon n'importe laquelle des revendications de 1 à 5 sert comme une partie dudit circuit de réglage.

7. Le pointeur selon la revendication 6, **caractérisé en ce qu'**un boîtier dudit pointeur a une forme identique à celle d'un stylo.

8. Le pointeur selon la revendication 6 ou 7, **caractérisé en ce que** ledit matériau à pression est disposé de manière à transmettre la pression contre un noyau (102, 523, 802) dudit condensateur variable, en particulier contre une partie opposée du noyau (102, 523, 802).

9. Le pointeur selon la revendication 6 ou 7, **caractérisé en ce que** ledit matériau à pression est disposé de manière à transmettre la pression contre une direction qui est perpendiculaire à une direction longitudinale dudit pointeur dudit condensateur variable.

10. Le pointeur selon n'importe laquelle des revendications de 6 à 9, **caractérisé en ce que** lesdites deux plaques d'électrode (19, 20, 119, 120) sont destinées à être séparées par une distance prédéterminée où un substrat de circuit double face dont l'épaisseur est la même que ladite distance de séparation, est prévu de manière à ce que la face latérale dudit substrat de circuit double face bute contre le côté latéral de ladite substance diélectrique (18, 118, 318) au niveau de la partie séparée qui doit être perpendiculaire audites plaques d'électrode (19, 20, 119, 120), et un conducteur de circuit imprimé est prévu sur une partie qui contacte lesdites deux plaques d'électrode (19, 20, 119, 120) dudit substrat de circuit double face où ladite partie conductrice et lesdites deux électrodes sont respectivement soudées.
